# EUROPÄISCHE PATENTANMELDUNG

(11) **EP 3 702 083 A1**
(43) Veröffentlichungstag der Anmeldung: **02.09.2020**
(21) Anmeldenummer: 19159636.0
(22) Anmeldetag: 27.02.2019
(51) Int. Cl.: B23K 9/073, B23K 9/08, B23K 9/09, B23K 9/095, B23K 9/20

(54) **VERFAHREN UND VORRICHTUNG ZUM SCHWEISSEN EINES WERKSTÜCKS**

(71) Anmelder: FRONIUS INTERNATIONAL GmbH, 4643 Pettenbach (AT)
(72) Erfinder: STARZENGRUBER, Andreas, 4643 Pettenbach (AT); DÖRNER, Philipp, 4643 Pettenbach (AT)
(74) Vertreter: Sonn & Partner Patentanwälte

(57) **Zusammenfassung**

Die Erfindung betrifft ein Verfahren und eine Vorrichtung (1) zum Schweißen eines Werkstücks (2), wobei mit Hilfe eines gepulsten Schweißstroms ₍I_{S}) ein Lichtbogen (LB) erzeugt wird, und der Lichtbogen (LB) mit Hilfe eines Magnetfelds, das durch eine von einem Strom (I_{A}) durchflossenen Spule (3) erzeugt wird, abgelenkt wird. Erfindungsgemäß wird der Strom (I_{A}) durch die Spule (3) zur Erzeugung des Magnetfels zur Ablenkung des Lichtbogens (LB) synchron und gegengleich zum Schweißstrom (I_{S}) angesteuert.

## Beschreibung

Die Erfindung betrifft ein Verfahren zum Schweißen eines Werkstücks, wobei mit Hilfe eines gepulsten Schweißstroms ein Lichtbogen erzeugt wird, und der Lichtbogen mit Hilfe eines Magnetfelds, das durch eine von einem Strom durchflossenen Spule erzeugt wird, abgelenkt wird.

Weiters betrifft die Erfindung eine Vorrichtung zum Schweißen eines Werkstücks, mit einer Schweißstromquelle zur Bereitstellung eines gepulsten Schweißstroms zur Erzeugung eines Lichtbogens, und mit einer Spule zur Erzeugung eines Magnetfelds zur Ablenkung des Lichtbogens.

Die Erfindung bezieht sich hauptsächlich auf ein Bolzenschweißverfahren und eine Bolzenschweißvorrichtung, wobei ein Bolzen mit einem Werkstück verschweißt wird. Dabei wird zwischen der dem Werkstück zugewandten Stirnseite des Bolzens und dem Werkstück ein Lichtbogen gezündet und dadurch sowohl der Bolzen als auch das Werkstück lokal angeschmolzen. Anschließend wird der Bolzen unter geringem Anpressdruck mit dem Werkstück verbunden. Auf diese Weise können bspw. Gewinde, Bolzen, Buchsen, Haken oder Ösen mit größeren Werkstücken verbunden werden.

Dadurch, dass sich der Lichtbogen zwischen der Stirnfläche des Bolzens und dem Werkstück nicht gleichmäßig über den gesamten Querschnitt des Bolzens und dem darunter angeordneten Teil des Werkstücks verteilt, kommt es zu einem ungleichmäßigen Anschmelzen der Stirnfläche des Bolzens und des Werkstücks, wodurch die Qualität der Schweißverbindung beeinträchtigt werden kann.

Zur Abhilfe existieren Verfahren und Vorrichtungen, durch welche der Lichtbogen mithilfe eines Magnetfelds abgelenkt wird. Bspw. beschreibt die EP 1 649 962 B1 ein Verfahren und System zum Verschweißen eines Bolzens aus Vollmaterial mit einer kegelförmigen, leicht geneigten Stirnfläche, wobei durch Anlegen eines Quermagnetfelds ein spiralförmiges Überstreichen der gesamten Stirnfläche des Bolzens durch den Lichtbogen und in der Folge ein gleichmäßiges Aufschmelzen der gesamten Stirnfläche erzielt werden kann. Das spiralförmige Überstreichen des Lichtbogens über die gesamte Stirnfläche des Bolzens wird durch die spezielle Gestaltung der Stirnfläche erzielt. Nachteilig dabei ist, dass der mit dem Werkstück zu verbindende Bolzen eine bestimmte Form aufweisen muss und kein beliebiger Bolzen für das Schweißverfahren verwendet werden kann.

Die DE 102 21 387 C1 beschreibt ein anderes Bolzenschweißverfahren, bei dem durch eine asymmetrische Anordnung der Spule zur Erzeugung des den Lichtbogen ablenkenden Magnetfelds Verbesserungen erzielt werden können, insbesondere die Schweißstelle besser einsehbar ist.

Abgesehen von den oben genannten Bolzenschweißverfahren treten ähnliche Probleme auch bei allgemeinen Schweißverfahren auf, da der Lichtbogen immer dazu tendiert sich in Richtung Masseanschluss des Werkstücks zu orientieren bzw. von großen Massen abgelenkt wird. Durch eine symmetrische Anordnung mehrerer Masseanschlüsse des Werkstücks kann dieses Problem zwar verhindert werden, bei einer Bewegung des Schweißbrenners gegenüber des Werkstücks kommt es jedoch wieder zu Abweichungen der Lage des Lichtbogens und dadurch zu einer möglichen unregelmäßigen Aufschmelzung des Schweißdrahts und Werkstücks.

Insbesondere bei sogenannten Fülldrähten, das sind hohle Schweißdrähte mit darin angeordnetem Flussmittel, kann es auf der ringförmigen Stirnfläche des Schweißdrahts ebenfalls zu einer unregelmäßigen Anordnung des Lichtbogens und somit zu einer unregelmäßigen Anschmelzung der Stirnfläche des Schweißdrahts kommen.

Die Aufgabe der vorliegenden Erfindung besteht in der Schaffung eines oben genannten Verfahrens und einer oben genannten Vorrichtung zum Schweißen eines Werkstücks, durch welche eine möglichst gleichmäßige Verteilung des Lichtbogens zwischen dem abschmelzenden Schweißdraht oder der Stirnfläche eines Bolzens und dem darunter liegenden Werkstück resultiert, wodurch der Schweißdraht bzw. Bolzen und das Werkstück gleichmäßig aufgeschmolzen werden kann und in der Folge eine optimale Schweißverbindung resultiert. Besondere Anforderungen an den Schweißdraht bzw. Bolzen sollen nicht notwendig sein. Das gegenständliche Verfahren und die gegenständliche Vorrichtung zum Schweißen eines Werkstücks soll möglichst einfach und kostengünstig realisierbar sein. Nachteile des Standes der Technik sollen vermieden oder zumindest reduziert werden.

Die Aufgabe der Erfindung wird in verfahrensmäßiger Hinsicht dadurch gelöst, dass der Strom durch die Spule zur Erzeugung des Magnetfels zur Ablenkung des Lichtbogens synchron und gegengleich zum Schweißstrom angesteuert wird. Erfindungsgemäß ist vorgesehen, dass die Spule zur Erzeugung des Magnetfelds zur Ablenkung des Lichtbogens immer dann mit einem Strom beaufschlagt wird, wenn der Schweißstrom minimal bzw. gering ist und die Ablenkspule abgeschaltet bzw. der Strom durch die Spule auf ein Minimum reduziert wird, wenn der Schweißstrom maximal bzw. höher ist. Es hat sich gezeigt, dass der Lichtbogen durch das Quermagnetfeld leichter beeinflussbar ist, wenn er mit weniger Leistung bzw. einem niedrigeren Strom betrieben wird, wohingegen die Beeinflussung des Lichtbogens mit höherer Energie bzw. zu Zeiten höheren Schweißstroms nicht so leicht möglich ist. Durch die erfindungsgemäße synchrone und gegengleiche Ansteuerung des Spulenstroms kann somit eine optimale Position des Lichtbogens bei gleichzeitig niedrigem Verfahrensaufwand erzielt werden. In der Folge resultiert durch die gleichmäßige Materialaufschmelzung eine höhere Qualität der Schweißverbindung. Eine spezielle Gestaltung des Bolzens, einer Elektrode oder des Schweißdrahts, von dem der Lichtbogen zum Werkstück gezündet wird, ist im Gegensatz zum oben genannten Stand der Technik nicht erforderlich. Auch genügt nur ein Masseanschluss am Werkstück, dessen Lage nicht besonders beachtet werden muss.

Der Schweißstrom wird vorzugsweise mit einer Pulsfrequenz zwischen 10 Hz und 1000 Hz, insbesondere zwischen 50 Hz und 150 Hz, gepulst. Derartige Werte sind bei Schweißverfahren gemäß dem Stand der Technik üblich.

Gemäß einem weiteren Merkmal der Erfindung ist vorgesehen, dass der Schweißstrom zwischen einem oberen Schwellwert und einem unteren Schwellwert oder die Schweißleistung zwischen einem oberen Wert und einem unteren Wert verändert wird. Der obere Schwellwert des Schweißstroms wird an die jeweiligen Gegebenheiten und an die entsprechende Schweißaufgabe angepasst, um ein möglichst rasches Anschmelzen erzielen zu können. Der untere Schwellwert des Schweißstroms wird vorzugsweise so gewählt, dass der Lichtbogen während des Schweißprozesses aufrecht erhalten werden kann. Dadurch erfolgt eine Regelung auf konstanten Schweißstrom. Bei einer Regelung auf konstante Schweißleistung werden die entsprechenden oberen und unteren Schwellwerte für die Schweißleistung vorgegeben. Der Schweißstrom stellt sich dann aufgrund der geregelten Schweißleistung ein.

Der Tastgrad bzw. Duty Cycle des Schweißstroms beträgt zwischen 10% und 90%, insbesondere 50%. Die Auswahl des Tastgrads erfolgt einerseits nach dem Gesichtspunkt einer möglichst hohen Energieeinbringung in den Lichtbogen, andererseits nach Maßgabe einer leichteren Beeinflussbarkeit der Lage des Lichtbogens in den Phasen mit geringerem Schweißstrom. Ein Tastgrad von 50% ist hier ein optimaler Kompromiss, allerdings können geänderte Tastgrade für spezielle Anwendungen von Vorteil sein.

Vorteilhafterweise wird der Schweißstrom für eine konstante Schweißleistung, vorzugsweise zwischen 2 kW und 10 kW, geregelt. Da die Wärmeeinbringung in den Lichtbogen und somit in die anzuschmelzenden Teile maßgeblich von der Leistung des Lichtbogens abhängt, ist eine derartige Regelung auf konstante Leistung von Vorteil. Änderungen in der Lichtbogenspannung werden somit durch eine Veränderung des Schweißstroms ausgeglichen, sodass eine konstante Schweißleistung resultiert.

Der Strom durch die Spule kann mit einem zeitlichen Offset gegenüber dem Schweißstrom angelegt werden. Durch eine derartige Phasenverschiebung des Spulenstroms gegenüber dem Schweißstrom in geringem Ausmaß, bspw. um einige Prozent der Periodendauer, kann eine bessere Beeinflussung des Lichtbogens erreicht werden. Bei einer negativen Phasenverschiebung des Spulenstroms gegenüber dem Schweißstrom kann früher das Maximum des Spulenstromes erzielt werden.

Weitere Vorteile können sich dadurch ergeben, dass der Strom durch die Spule eine vorgegebene Zeitspanne nach Beginn des Schweißstroms und bzw. oder eine vorgegebene Zeitspanne vor dem Ende des Schweißstroms abgeschaltet wird. Durch das Vorsehen derartiger Zeitspannen nach dem Beginn des Schweißverfahrens und vor der Beendigung des Schweißverfahrens kann eine verbesserte Beeinflussung des Lichtbogens durch das Quermagnetfeld erzielt werden. Durch das Einfügen einer Zeitspanne nach dem Beginn des Schweißverfahrens ist die Stabilität des Lichtbogens verbessert und die Position des Lichtbogens fixiert. Wenn das Quermagnetfeld bereits vor dem Ende des Schweißverfahrens abgeschaltet wird, kann ein besseres und stabileres Ende des Schweißverfahrens erzielt werden.

Der Strom durch die Spule zur Erzeugung des Magnetfelds zur Ablenkung des Lichtbogens kann mit einem DC-Offset gepulst werden. Wenn der Strom durch die Spule zur Erzeugung des Magnetfelds zur Ablenkung des Lichtbogens in den Phasen des hohen Schweißstroms nicht komplett abgeschaltet wird, sondern mit einem geringen Offset betrieben wird, kann eine gewisse Grundmagnetisierung der Spule erzielt werden.

Die Anstiegsgeschwindigkeit des Stroms durch die Spule kann beispielsweise durch die Amplitude der an die Spule angelegten Spannung, sowie die Induktivität der Spule verändert werden. Durch eine geringere Anstiegsgeschwindigkeit ist das Pulsen des Schweißstroms mit einer höheren Pulsfrequenz möglich.

Wenn vor Beginn des Schweißverfahrens eine Vorstromphase, vorzugsweise zwischen 1 ms und 100 ms, eingelegt wird, kann eine Verbesserung des Verfahrens durch eine Vorwärmung erzielt werden. Ebenso stabilisiert sich der Lichtbogen dadurch und der Lichtbogen reißt beim Pulsen nicht sofort ab.

Aus dem zeitlichen Verlauf des Stroms durch die Spule kann eine maximale Pulsfrequenz des Schweißstroms ermittelt werden. Bspw. kann durch das Ableiten der Zeitkonstante aus dem Verlauf des Spulenstroms nach dem ersten Strompuls oder nach einigen Strompulsen auf die maximal mögliche Pulsfrequenz des Schweißstroms rückgerechnet werden und das Schweißverfahren auf diese ermittelte maximale Pulsfrequenz begrenzt werden.

Gelöst wird die erfindungsgemäße Aufgabe auch durch eine oben genannte Schweißvorrichtung, bei der eine Steuerungseinrichtung zur Steuerung des Stroms durch die Spule zur Erzeugung eines Magnetfelds zur Ablenkung des Lichtbogens synchron und gegengleich zum gepulsten Schweißstrom vorgesehen ist. Die gegenständliche Vorrichtung ist besonders einfach und kostengünstig realisierbar, da bloß die Einrichtung zur Erzeugung des Spulenstroms mit der Schweißstromquelle synchronisiert werden muss, was durch eine ohnedies in einer üblichen Schweißvorrichtung enthaltenen Steuerungseinrichtung bzw. einem Mikrocontroller einfach implementiert werden kann. Zu den weiteren durch die Schweißvorrichtung erzielbaren Vorteilen wird auf die obige Beschreibung des Schweißverfahrens verwiesen.

Die Schweißstromquelle ist vorteilhafterweise zur Regelung des Schweißstroms für eine konstante Schweißleistung, vorzugsweise zwischen 2 kW und 10 kW, ausgebildet. Durch die Konstanthaltung der Schweißleistung und somit der in den Lichtbogen eingebrachten Energie wird eine gleichmäßige Aufschmelzung des Schweißdrahts bzw. Bolzens und des Werkstücks und somit eine gleichbleibende Qualität der Schweißverbindung erzielt.

Bei einer besonders bevorzugten Schweißvorrichtung zum Bolzenschweißen ist ein Bolzenhalter zur Aufnahme eines mit dem Werkstück zu verbindenden Bolzens vorgesehen, wobei die Schweißstromquelle zur Bildung des Lichtbogens zwischen der dem Werkstück zugewandten Fläche des Bolzens und dem Werkstück ausgebildet ist, und weiters eine Hubvorrichtung zum Abheben des Bolzens vom Werkstück gegen die Kraft einer Feder vorgesehen. Wie bereits oben erwähnt, eignet sich die gegenständliche Erfindung insbesondere für Bolzenschweißvorrichtungen, wobei eine gleichmäßige Aufschmelzung der dem Werkstück zugewandten Seite des Bolzens oder Ringbolzens durch die Beeinflussung der Lage des Lichtbogens erzielt werden kann.

Die Steuerungseinrichtung kann zur Ermittlung einer maximalen Pulsfrequenz des Schweißstroms aus dem zeitlichen Verlauf des Stroms durch die Spule ausgebildet sein. Wie bereits oben erwähnt, kann durch die Analyse der Kurvenform des Stroms durch die Spule zur Erzeugung des Magnetfelds zur Ablenkung des Lichtbogens bzw. durch Bestimmung der Zeitkonstanten bzw. der Anstiegsgeschwindigkeit auf eine maximale Pulsfrequenz rückgerechnet werden.

Die Erfindung wird anhand der beigefügten Zeichnungen näher erläutert. Darin zeigen:
- Fig. 1: ein Blockschaltbild einer Vorrichtung zum Schweißen eines Werkstücks mit einer Spule zur Erzeugung eines Magnetfelds zur Ablenkung des Lichtbogens;
- Fig. 2: die zeitlichen Verläufe des gepulsten Schweißstroms und des erfindungsgemäß gesteuerten Stroms durch die Spule zur Erzeugung des Magnetfelds zum Ablenken des Lichtbogens gemäß einem ersten Ausführungsbeispiel;
- Fig. 3: die zeitlichen Verläufe des Schweißstroms, der Schweißspannung, der gepulsten Schweißleistung und des Stroms durch die Spule zur Erzeugung des Magnetfelds zum Ablenken des Lichtbogens gemäß einem weiteren Ausführungsbeispiel mit Leistungsregelung;
- Fig. 4: die zeitlichen Verläufe des Schweißstroms, der Schweißspannung, der Schweißleistung und des Stroms durch die Spule zur Erzeugung des Magnetfelds zum Ablenken des Lichtbogens gemäß einem weiteren Ausführungsbeispiel mit einer zeitlichen Verzögerung des Spulenstroms;
- Fig. 5: drei Varianten des zeitlichen Verlaufs des Stroms durch die Spule zur Erzeugung des Magnetfelds zur Ablenkung des Lichtbogens mit drei verschiedenen Anstiegsgeschwindigkeiten; und
- Fig. 6: den zeitlichen Verlauf des Stroms durch die Spule zur Erzeugung des Magnetfelds zur Ablenkung des Lichtbogens zur Erklärung der Ermittlung der maximalen Pulsfrequenz des Schweißstroms.

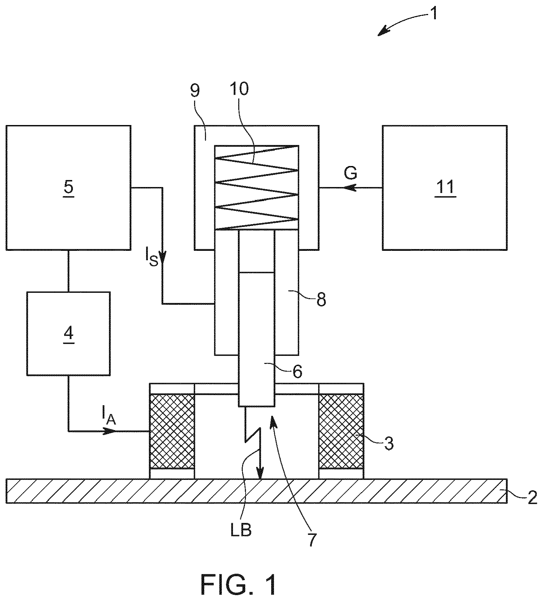

Fig. 1 zeigt ein Blockschaltbild einer Vorrichtung 1 zum Schweißen eines Werkstücks 2 mit einer Spule 3 zur Erzeugung eines Magnetfelds zur Ablenkung des Lichtbogens LB in Form eines Bolzenschweißgeräts. Die Schweißvorrichtung 1 beinhaltet einen Bolzenhalter 8 zur Aufnahme eines Bolzens 6, der mit einer entsprechenden Hubvorrichtung 9 verbunden ist. Die Hubvorrichtung 9 kann durch einen Hubmagnet gebildet sein, der den Bolzenhalter 8 zusammen mit dem Bolzen 6 gegen die Kraft einer Feder 10 vom Werkstück 2 abhebt. Anstelle der Feder 10 kann die Hubvorrichtung 9 auch durch einen Doppelhubmagnet gebildet sein, der den Bolzen 9 sowohl vom Werkstück 2 abhebt als auch an das Werstück 2 presst (nicht dargestellt). Der Bolzen 6 wird von einer Schweißstromquelle 5 mit einem Schweißstrom Iₛ beaufschlagt, wodurch zwischen der dem Werkstück 2 zugewandten Fläche 7 des Bolzens 6 und dem Werkstück 2 ein Lichtbogen LB gezündet wird. Die Position des Lichtbogens LB ändert sich während des Schweißverfahrens sehr unbestimmt, wodurch es zu einer unterschiedlichen Aufschmelzung der Fläche 7 und des Werkstücks 2 kommt und nach dem Anpressen des Bolzens 6 an das Werkstück 2 zu einer unterschiedlichen Qualität der Schweißverbindung. Zur Beeinflussung der Lage des Lichtbogens LB ist eine Spule 3 um die Schweißstelle angeordnet zur Erzeugung eines Magnetfelds, welches quer zum Lichtbogen orientiert ist und diesen örtlich ablenkt. Bei einer unkontrollierten Steuerung des Spulenstromes I_{A} kann die Position des Lichtbogens LB nicht gezielt beeinflußt werden. Bei der gegenständlichen Erfindung hingegen wird die Spule 3 durch eine Steuerungseinrichtung 4 (Spulenstromquelle) mit einem Strom I_{A} beaufschlagt, der synchron und gegengleich zum Schweißstrom Iₛ gesteuert ist. Dadurch resultiert eine intensivere Wirkung auf die Position des Lichtbogens LB und eine gleichmäßigere Aufschmelzung der Fläche 7 des Bolzens 6 und des Werkstücks 2.

Die Schweißvorrichtung 1 zeichnet sich durch relativ einfache und kostengünstige Realisierung aus. Allenfalls kann ein Gasspeicher 1 vorgesehen sein, der die Schweißstelle mit einem entsprechenden Schutzgas G versorgt. Die Erfindung ist auch auf eine allgemeine Schweißvorrichtung anwendbar, bei der der Lichtbogen LB nicht zwischen dem Bolzen 6 und dem Werkstück 2, sondern einer Elektrode oder einem abschmelzenden Schweißdraht und dem Werkstück 2 brennt (nicht dargestellt). Der Schweißstrom I_{S} und der Strom I_{A} durch die Spule 3 sind auch allgemein Schweißparameter, welche gemäß der Erfindung eingestellt, angesteuert, geregelt oder dgl. werden. Selbstverständlich kann die Erfindung auch ausgeführt werden, wenn andere Schweißparameter, wie Schweißleistung P_{S} und bzw. oder zeitliche Parameter verändert werden.

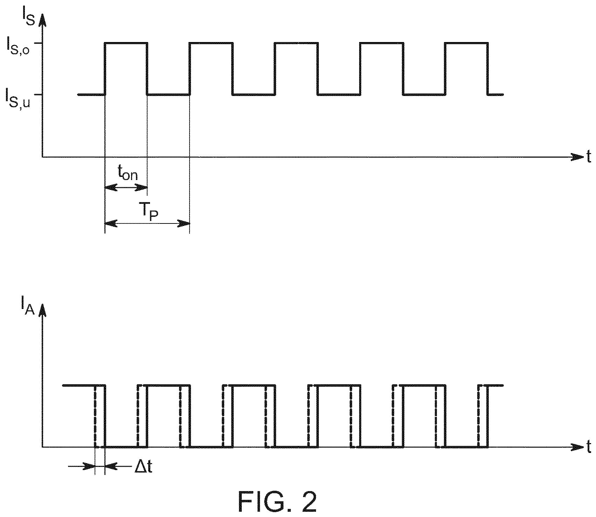

Fig. 2 zeigt die zeitlichen Verläufe des gepulsten Schweißstroms I_{S} und des erfindungsgemäß gesteuerten Stroms I_{A} durch die Spule 3 zur Erzeugung des Magnetfelds zum Ablenken des Lichtbogens LB gemäß einem ersten Ausführungsbeispiel. Der Schweißstrom I_{S} wird zwischen einem oberen Schwellwert des Schweißstroms I_{s,o} und einem unteren Schwellwert des Schweißstroms I_{s,u} gewechselt. Im dargestellten Ausführungsbeispiel wird ein oberer Schwellwert des Schweißstroms I_{s,o} während der Zeit tₒₙ und ein unterer Schwellwert des Schweißstroms I_{s,u} während der Restzeit zur Periodendauer T_{P} aufrecht erhalten. Im dargestellten Beispiel beträgt die Einschaltzeit tₒₙ die Hälfte der Periodendauer T_{P}, gleichbedeutend mit einem Tastgrad bzw. Duty Cyle von 50%. Bei diesem Ausführungsbeispiel wird auf einen konstanten Schweißstrom I_{S} geregelt, sodass sich in Abhängigkeit der Schweißspannung U_{S} über dem Lichtbogen LB eine Schweißleistung P_{S} einstellt.

Erfindungsgemäß wird der Strom I_{A} durch die Spule 3 synchron und gegengleich zum gepulsten Schweißstrom I_{S} angesteuert. Während der Zeit tₒₙ des oberen Schwellwerts des Schweißstroms I_{s,o} ist der Spulenstrom I_{A} Null oder minimal, wohingegen der Spulenstrom I_{A} maximal ist, wenn der Schweißstrom I_{S} auf dem unteren Schwellwert I_{S,u} liegt. Dadurch wird eine optimale Beeinflussung der Lage des Lichtbogens LB erzielt.

Durch eine geringfügige Phasenverschiebung des Spulenstroms I_{A} gegenüber dem Schweißstrom I_{S} um einen zeitlichen Offset Δt kann das Maximum des Spulenstromes I_{A} früher erreicht werden.

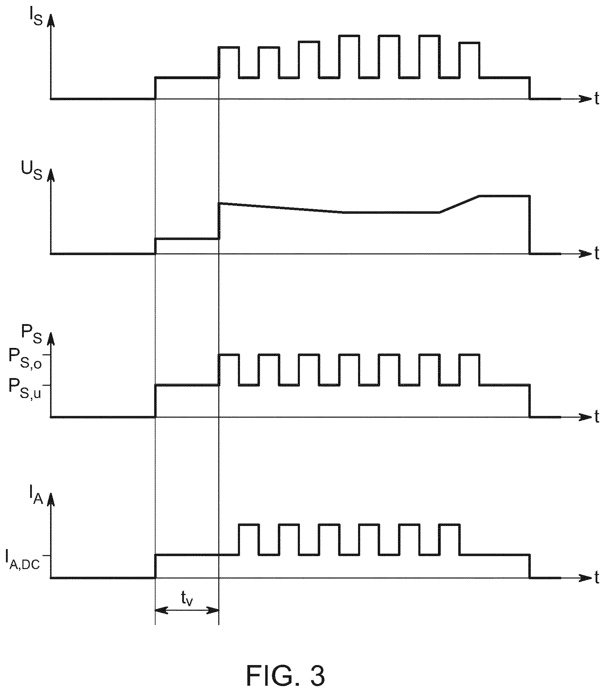

Fig. 3 zeigt die zeitlichen Verläufe des Schweißstroms I_{S}, der Schweißspannung U_{S}, der gepulsten Schweißleistung P_{S} und des Stroms I_{A} durch die Spule 3 zur Erzeugung des Magnetfelds zum Ablenken des Lichtbogens LB gemäß einem weiteren Ausführungsbeispiel mit Leistungsregelung. Bei diesem Ausführungsbeispiel erfolgt eine Regelung auf eine konstante Schweißleistung P_{S}, indem der Schweißstrom I_{S} in Abhängigkeit der Schweißspannung U_{S} entsprechend verändert wird. Bei einer Reduktion der Lichtbogen- bzw. Schweißspannung U_{S} wird der Schweißstrom I_{S} angehoben, wohingegen bei einem Anstieg der Schweißspannung U_{S} der Schweißstrom I_{S} gesenkt wird, resultierend in einer konstanten mittleren Schweißleistung P_{S}. Der Strom I_{A} durch die Spule 3 wird entsprechend gegengleich und synchron zum Schweißstrom I_{S} gesteuert. Anstelle einer Abschaltung der Spule 3, gleichbedeutend mit einem Spulenstrom I_{A} = 0 (siehe Fig. 2) kann auch ein gewisser Gleichanteil oder DC-Offset I_{A,DC} an die Spule 3 angelegt werden. Vor Beginn des Schweißverfahrens kann eine Vorstromphase mit einer Dauer tᵥ eingeschoben werden.

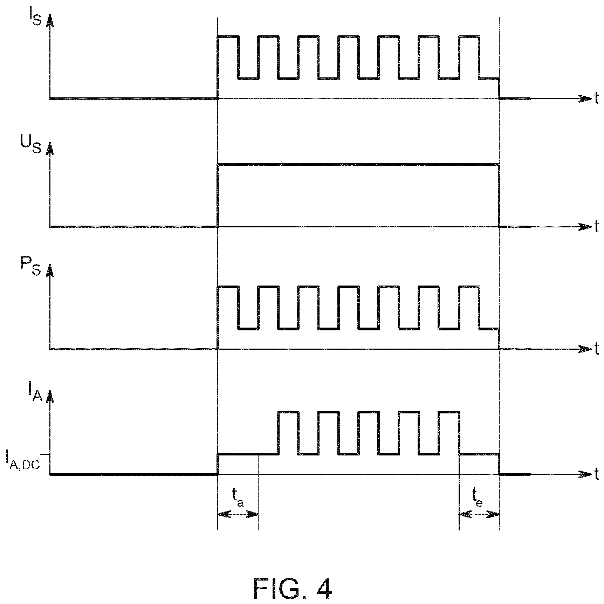

Fig. 4 zeigt die zeitlichen Verläufe des Schweißstroms I_{S}, der Schweißspannung U_{S}, der Schweißleistung P_{S} und des Stroms I_{A} durch die Spule 3 zur Erzeugung des Magnetfelds zum Ablenken des Lichtbogens LB gemäß einem weiteren Ausführungsbeispiel. Hier existiert keine Vorstromphase mit einer Dauer tᵥ wie bei Fig. 3, sodass das Schweißverfahren und die erfindungsgemäße sychron gegengleiche Ansteuerung des Stromes I_{A} sofort gestartet wird. Wie dargestellt, kann aber die Ansteuerung des Stroms I_{A} durch die Spule 3 zur Erzeugung des Magnetfelds zum Ablenken des Lichtbogens LB mit einer zeitlichen Verzögerung gestartet und eine vorgegebene Zeitdauer früher beendet werden. Der Spulenstrom I_{A} kann um eine voreingestellte Zeitspanne tₐ nach dem Beginn des Schweißverfahrens verzögert eingeschaltet und um eine voreingestellte Zeitspanne tₑ vor der Beendigung des Schweißverfahrens abgeschaltet werden. Während der Zeitspannen tₐ und tₑ kann der Strom I_{A} durch die Spule 3 einem gewissen Gleichanteil oder DC-Offset I_{A,DC} entsprechen, der beispielsweise 10%-20% des maximalen Stroms I_{A} betragen kann. Der Strom I_{A} durch die Spule 3 kann während der Zeitspannen tₐ und tₑ auch Null betragen. Unabhängig vom Wert des Stromes I_{A} wird durch das Einlegen der Zeitspanne tₐ nach dem Beginn des Schweißverfahrens eine bessere Stabilität des Lichtbogens LB erreicht. Die Ablenkung des Lichtbogens LB wird also verzögert gestartet. Ein stabileres Ende des Schweißverfahrens kann durch Einlegen einer voreingestellte Zeitspanne tₑ vor der Beendigung des Schweißverfahrens erreicht werden, indem die Ablenkung des Lichtbogens LB frühzeitig beendet wird.

Aus den Fig. 3 und 4 ist also ersichtlich, dass es für die Erfindung nicht wesentlich ist, ob auf einen konstanten Schweißstrom I_{S} oder auf eine konstante Schweißleistung P_{S} geregelt wird, da die relevanten Pulse des Schweißstroms I_{S} identisch auch in der Schweißleistung P_{S} vorhanden sind. Wichtig ist, dass die Pulse des Stroms I_{A} durch die Spule 3 synchron gegengleich sowohl zu den Pulsen des Schweißstroms I_{S} als auch zu den Pulsen der Schweißleistung P_{S} sind.

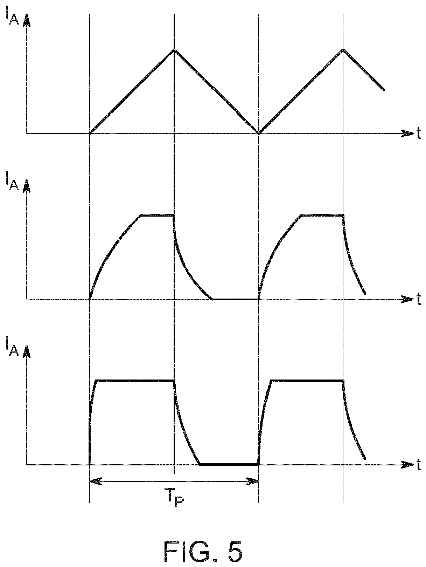

Fig. 5 zeigt drei Varianten des zeitlichen Verlaufs des Stroms I_{A} durch die Spule 3 zur Erzeugung des Magnetfelds zur Ablenkung des Lichtbogens mit drei verschiedenen Anstiegsgeschwindigkeiten tᵣ. Im obersten Zeitdiagramm der Fig. 5 steigt der Spulenstrom I_{A} mit einer sehr langsamen Anstiegsgeschwindigkeit an, resultierend in einem quasi dreieckförmigen Verlauf des Spulenstroms. Durch Anlegen einer höheren Spannung bzw. Veränderung der Induktivität der Spule 3, kann eine höhere Anstiegsgeschwindigkeit gemäß dem zweiten Zeitdiagramm erreicht werden. Im letzten Zeitverlauf wird ein nahezu rechteckförmiger Verlauf des Spulenstroms I_{A} mit einer besonders geringen Anstiegsgeschwindigkeit erzielt.

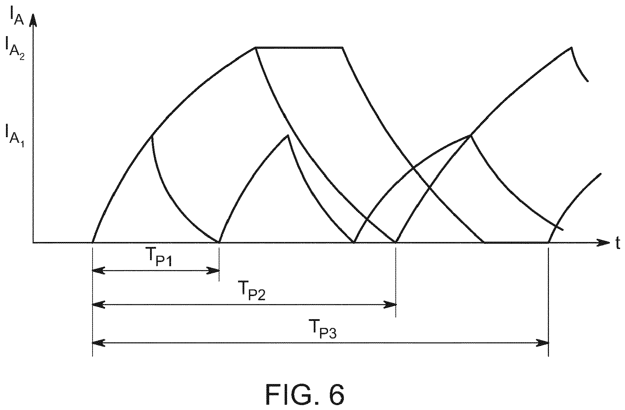

Fig. 6 zeigt den zeitlichen Verlauf des Stroms durch die Spule zur Erzeugung des Magnetfelds zur Ablenkung des Lichtbogens zur Erklärung der Ermittlung der maximalen Pulsfrequenz des Schweißstroms. Durch Ermittlung der Zeitkonstante bzw. Anstiegsgeschwindigkeit des Spulenstroms I_{A} kann auf die maximal erzielbare Pulsfrequenz f_{P} rückgerechnet werden. In Abhängigkeit der Amplitude des Spulenstroms I_{A} resultieren unterschiedliche maximale Periodenzeiten T_{P} bzw. unterschiedliche maximale Pulsfrequenzen f_{P} = 1/T_{P}. Beim Beispiel mit niedrigerer Amplitude I_{A1} resultiert eine geringere Periodendauer T_{P1} bzw. höhere maximale Pulsfrequenz f_{P1} = 1/T_{P1}. Bei einer höheren Amplitude des Stromes I_{A2} durch die Spule 3 resultiert eine höhere Periodendauer T_{P2} gleichbedeutend mit einer niedrigeren maximalen Pulsfrequenz f_{P}. Im dritten Beispiel mit der höheren Amplitude des Stromes I_{A2} wird der Strom I_{A} nicht gleich nach Erreichen des Maximums I_{A2} wieder abgeschaltet, sondern eine gewisse Zeit das Maximum I_{A2} aufrechterhalten. Dadurch resultiert die Periodendauer T_{P3} bzw. die Pulsfrequenz f_{P3} = 1/T_{P3}.

## Patentansprüche

1. Verfahren zum Schweißen eines Werkstücks (2), wobei mit Hilfe eines gepulsten Schweißstroms (I_{S}) ein Lichtbogen (LB) erzeugt wird, und der Lichtbogen (LB) mit Hilfe eines Magnetfelds, das durch eine von einem Strom (I_{A}) durchflossenen Spule (3) erzeugt wird, abgelenkt wird, **dadurch gekennzeichnet, dass** der Strom (I_{A}) durch die Spule (3) zur Erzeugung des Magnetfels zur Ablenkung des Lichtbogens (LB) synchron und gegengleich zum Schweißstrom (I_{S}) angesteuert wird.

2. Verfahren nach Anspruch 1, **dadurch gekennzeichnet, dass** der Schweißstrom (I_{S}) mit einer Pulsfrequenz (f_{P}) zwischen 10 Hz und 1000 Hz, insbesondere zwischen 50 Hz und 150 Hz, gepulst wird.

3. Verfahren nach Anspruch 1 oder 2, **dadurch gekennzeichnet, dass** der Schweißstrom (I_{S}) zwischen einem oberen Schwellwert (I_{s,o}) und einem unteren Schwellwert (I_{s,u}) oder die Schweißleistung (P_{S}) zwischen einem oberen Wert (P_{s,o}) und einem unteren Wert (P_{s,u}) verändert wird.

4. Verfahren nach einem der Ansprüche 1 bis 3, **dadurch gekennzeichnet, dass** der Tastgrad des Schweißstroms (I_{S}) zwischen 10% und 90%, insbesondere 50% beträgt.

5. Verfahren nach einem der Ansprüche 1 bis 4, **dadurch gekennzeichnet, dass** der Schweißstrom (I_{S}) für eine konstante Schweißleistung (P_{S}), vorzugsweise zwischen 2 kW und 10 kW, geregelt wird.

6. Verfahren nach einem der Ansprüche 1 bis 5, **dadurch gekennzeichnet, dass** der Strom (I_{A}) durch die Spule (3) mit einem zeitlichen Offset (Δt) gegenüber dem Schweißstrom (I_{S}) angelegt wird.

7. Verfahren nach einem der Ansprüche 1 bis 6, **dadurch gekennzeichnet, dass** der Strom (I_{A}) durch die Spule (3) eine vorgegebene Zeitspanne (tₐ) nach dem Beginn des Schweißstroms (I_{S}) und bzw. oder eine vorgegenene Zeitspanne (tₑ) vor dem Ende des Schweißstroms (I_{S}) abgeschaltet wird.

8. Verfahren nach einem der Ansprüche 1 bis 7, **dadurch gekennzeichnet, dass** der Strom (I_{A}) durch die Spule (3) mit einem DC-Offset (I_{A,DC}) gepulst wird.

9. Verfahren nach einem der Ansprüche 1 bis 8, **dadurch gekennzeichnet, dass** die Anstiegsgeschwindigkeit (tᵣ) des Stroms (I_{A}) durch die Spule (3) verändert wird.

10. Verfahren nach einem der Ansprüche 1 bis 9, **dadurch gekennzeichnet, dass** vor Beginn des Schweißverfahrens eine Vorstromphase (t_{V}), vorzugsweise zwischen 1 ms und 100 ms, eingelegt wird.

11. Verfahren nach einem der Ansprüche 1 bis 10, **dadurch gekennzeichnet, dass** aus dem zeitlichen Verlauf des Stroms (I_{A}) durch die Spule (3) eine maximale Pulsfrequenz (f_{P,max}) des Schweißstroms (I_{S}) ermittelt wird.

12. Vorrichtung (1) zum Schweißen eines Werkstücks (2), mit einer Schweißstromquelle (5) zur Bereitstellung eines gepulsten Schweißstroms (I_{S}) zur Erzeugung eines Lichtbogens (LB), und mit einer Spule (3) zur Erzeugung eines Magnetfelds zur Ablenkung des Lichtbogens (LB), **dadurch gekennzeichnet, dass** eine Steuerungseinrichtung (4) zur Steuerung des Stroms (I_{A}) durch die Spule (3) synchron und gegengleich zum gepulsten Schweißstrom (I_{S}) vorgesehen ist.

13. Vorrichtung (1) nach Anspruch 12, **dadurch gekennzeichnet, dass** die Schweißstromquelle (5) zur Regelung des Schweißstroms (I_{S}) für eine konstante Schweißleistung (P_{S}), vorzugsweise zwischen 2 kW und 10 kW, ausgebildet ist.

14. Vorrichtung (1) nach Anspruch 12 oder 13, **dadurch gekennzeichnet, dass** ein Bolzenhalter (8) zur Aufnahme eines mit dem Werkstück (2) zu verbindenden Bolzens (6) vorgesehen ist, wobei die Schweißstromquelle (5) zur Bildung des Lichtbogens (LB) zwischen der dem Werkstück (2) zugewandten Fläche (7) des Bolzens (6) und dem Werkstück (2) ausgebildet ist, und mit einer Hubvorrichtung (9) zum Abheben des Bolzens (6) vom Werkstück (2) gegen die Kraft einer Feder (10).

15. Vorrichtung (1) nach Anspruch 14, **dadurch gekennzeichnet, dass** die Steuerungseinrichtung (4) zur Ermittlung einer maximalen Pulsfrequenz (f_{P,max}) des Schweißstroms (I_{S}) aus dem zeitlichen Verlauf des Stroms (I_{A}) durch die Spule (3) ausgebildet ist.
